# FASCICULE DE BREVET EUROPEEN

(11) **EP 3 303 030 B1**
(45) Date de publication et mention de la délivrance du brevet: **09.09.2020**
(21) Numéro de dépôt: 16731238.8
(22) Date de dépôt: 30.05.2016
(51) Int. Cl.: B60H 1/24, B60H 1/34

(54) **CONSOLE PAVILLON DE DIFFUSION D'AIR CONDITIONNE DANS LA PARTIE ARRIÈRE DE L'HABITACLE D'UN VÉHICULE AUTOMOBILE**
DACHMONTAGE ZUR DIFFUSION VON KLIMATISIERTER LUFT IN DEN HINTEREN TEIL DER KABINE EINES MOTORFAHRZEUGS
ROOF FITTING FOR DIFFUSING CONDITIONED AIR INTO THE REAR PART OF THE CABIN OF A MOTOR VEHICLE

(30) Priorité: 01.06.2015 FR 1554927
(43) Date de publication de la demande: 11.04.2018
(73) Titulaire: PSA AUTOMOBILES S.A., 78300 Poissy (FR)
(72) Inventeur: TERKI, Chabane, 25200 Montbeliard (FR); GUET, Christophe, 25200 Montbeliard (FR)
(86) Numéro de dépôt international: PCT/FR2016/051288
(87) Numéro de publication internationale: WO 2016/193607

(56) Documents cités:
- EP-A1- 2 832 565
- WO-A1-2010/150333
- US-A1- 2007 205 633
- US-B1- 6 616 523

## Description

### Domaine de l'invention

La présente invention concerne d'une manière générale les dispositifs de conditionnement d'air pour l'habitacle d'un véhicule automobile.

Elle se rapporte en particulier à une console pavillon de diffusion d'air conditionné dans la partie arrière de l'habitacle d'un tel véhicule.

### Arrière-plan de l'invention

Les dispositifs de conditionnement d'air de la partie arrière de l'habitacle d'un véhicule automobile sont bien connus de l'art antérieur.

On connaît en particulier de tels dispositifs comportant une conduite pavillon de circulation et de diffusion d'air conditionné, raccordée à une unité de génération d'air conditionné située sur un côté latéral interne de la partie arrière de la carrosserie du véhicule, et apte à émettre des flux d'air conditionnés en direction des sièges des rangées arrière du véhicule.

La demande américaine US 6,616,523 décrit une telle conduite pavillon de circulation et de diffusion d'air conditionné s'étendant longitudinalement dans la partie arrière de l'habitacle et formée par la paroi constituant le plafonnier du véhicule ainsi que par une coque creuse située sous le toit du véhicule et dont les deux bords latéraux sont fixés contre la face supérieure de ce plafonnier en relation face à face. Le document WO 2010/150333 A1 décrit une console pavillon de circulation et de diffusion d'air conditionné s'étendant longitudinalement dans la partie arrière de l'habitacle d'un véhicule automobile comportant une pluralité de bouches d'aération situées dans sa partie inférieure. Ladite console est suspendue au plafonnier dudit véhicule et en ce qu'elle présente une multitude d'orifices latéraux aptes à diffuser de l'air conditionné sur les deux côtés de ladite console suivant une direction sensiblement horizontale.

La conduite pavillon comprend également une pluralité de bouches d'aération situées dans sa partie inférieure et aptes à diffuser de l'air conditionné en direction des sièges arrière dudit véhicule.

En mode refroidissement, les courants d'air froid diffusés par une telle conduite ont tendance à provoquer à la longue un certain inconfort pour les passagers les recevant en plein visage. En outre, ce type de console ne permet pas d'assurer une distribution homogène de la température dans la partie arrière de l'habitacle ce qui génère une sensation d'instabilité thermique.

### Objet et résumé de l'invention

La présente invention vise donc à proposer une console pavillon de diffusion d'air conditionné dans la partie arrière de l'habitacle d'un véhicule automobile palliant au moins partiellement aux inconvénients précités (permettant d'assurer une meilleure homogénéité de l'air diffusé dans la partie arrière de l'habitacle d'un véhicule automobile).

Elle propose à cet effet un console pavillon de circulation et de diffusion d'air conditionné s'étendant longitudinalement dans la partie arrière de l'habitacle d'un véhicule automobile et raccordée à une unité de génération d'air conditionné logée dans ledit véhicule ;
ladite console comportant une pluralité de bouches d'aération situées dans sa partie inférieure et aptes à diffuser de l'air conditionné en direction des sièges arrière dudit véhicule ;
caractérisée en ce que ladite console est suspendue au plafonnier dudit véhicule et en ce qu'elle présente une multitude d'orifices latéraux aptes à diffuser de l'air conditionné sur les deux côtés de ladite console suivant une direction sensiblement horizontale, comportant trois rangées de dites bouches d'aération réparties longitudinalement entre son extrémité arrière raccordée à la dite unité de génération d'air conditionné et un module de commande situé à son extrémité avant, chaque dite rangée est formée par deux dites bouches d'aération s'étendant symétriquement de part et d'autre du plan longitudinal médian de la dite console, et en ce qu'elle comporte deux murets internes s'étendant transversalement et symétriquement de part et d'autre de son plan longitudinal médian au-dessus des deux bouches d'aération de la rangée la plus proche de ladite extrémité arrière de raccordement.

Le double système de diffusion de la console pavillon selon l'invention permet de réaliser une mise à température rapide de la partie arrière de l'habitacle grâce aux bouches d'aération directionnelles, mais également d'effectuer via les orifices un brassage permanent de l'air contenu de la partie arrière de l'habitacle générant une atmosphère homogène et confortable dans cette zone.

En outre, cette console permet de limiter la durée d'utilisation des bouches d'aération à la période nécessaire à l'obtention de la température de consigne. En effet, une fois cette dernière atteinte, la seule diffusion indirecte d'air conditionnée par les orifices est alors suffisante pour assurer son maintien tout en offrant un confort optimum aux passagers.

Selon des caractéristiques préférées de l'invention :
- ladite console est formée par l'assemblage en relation de face à face entre une coque creuse support fixée audit plafonnier et un panneau de couverture disposé sous ladite coque ;
- ladite coque creuse et ledit panneau de couverture sont assemblés l'un à l'autre de manière étanche de sorte que l'air conditionné circule directement dans l'espace interne de ladite console formant conduite ;
- ladite console est suspendue audit plafonnier par l'intermédiaire d'une plaque métallique de renfort soudée sur ledit plafonnier et sur laquelle est fixée ladite coque creuse ;
- chaque dite bouche d'aération comprend une buse de diffusion munie d'au moins un volet rotatif permettant de réguler et d'orienter l'air conditionné sortant de cette bouche ;
- lesdits orifices sont répartis longitudinalement sur deux zones situées respectivement à proximité de ladite extrémité arrière de raccordement et entre les deux rangées de bouches d'aération les plus éloignées de cette même extrémité arrière de raccordement ; et/ou
- ladite console comporte un dispositif d'éclairage d'ambiance comprenant deux guides lumineux souples courant le long de ses deux côtés latéraux et étant couplés chacun à au moins une source lumineuse.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une vue de dessus de la partie arrière d'un véhicule automobile dans lequel est monté un dispositif de conditionnement d'air ;
- la figure 2 représente une vue éclatée en perspective de la conduite pavillon de circulation et de diffusion d'air conditionné que comporte le dispositif de conditionnement d'air de la figure 1 ;
- la figure 3 est une vue de côté de la conduite pavillon de la figure 2 dans sa configuration montée ;
- la figue 4 représente un agrandissement du détail IV-IV de la figure 3 ;
- la figure 5 est une vue en perspective de la conduite pavillon de la figure 2 sur laquelle la partie située à gauche du plan longitudinal médian a été arrachée ; et
- la figure 6 est une vue en perspective de dessus de la conduite pavillon de la figure 2, montrée après sa fixation sur la plaque métallique de renfort soudée au plafonnier du véhicule.

### Description détaillée d'un mode préféré de réalisation

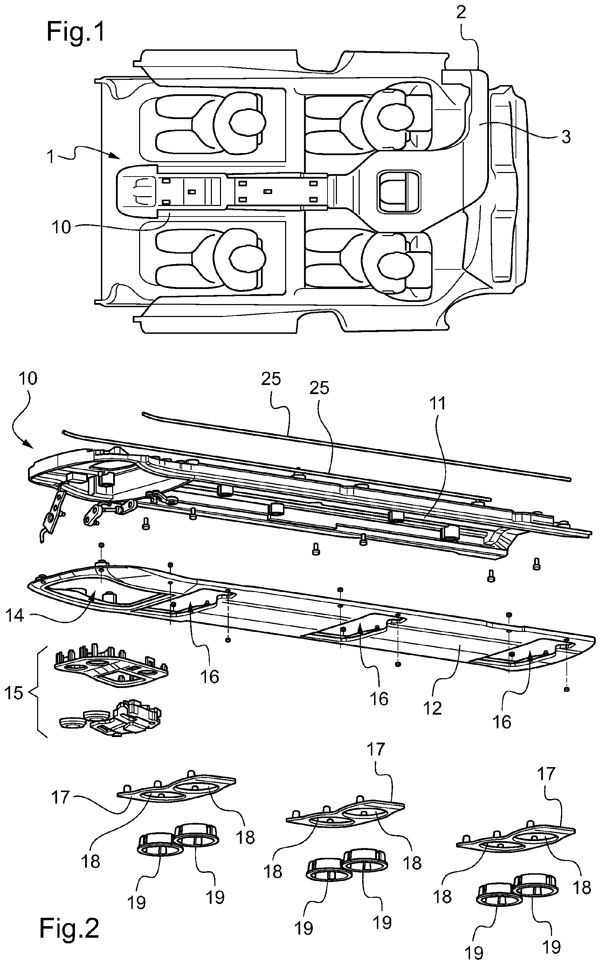

La figure 1 montre un véhicule automobile dans lequel est monté un dispositif de conditionnement d'air 1 apte à diffuser de l'air conditionné dans la zone arrière de l'habitacle afin d'améliorer le confort des passagers assis sur les sièges des rangées arrière.

Ce dispositif de conditionnement d'air 1 comporte une unité de génération d'air conditionné située sur le côté latéral interne droit de la partie arrière de la carrosserie du véhicule et comprenant classiquement un module de chauffage, un module de refroidissement ainsi qu'une soufflante.

Le dispositif 1 comporte également une console pavillon 10 de circulation et de diffusion d'air conditionné, fermée à son extrémité avant et dont l'extrémité arrière est raccordée à l'unité de génération d'air conditionné via une conduite montante latérale 2 se prolongeant en un demi-arceau 3.

Cette console pavillon, suspendue en dessous du plafonnier s'étend longitudinalement dans la zone arrière de l'habitacle et au centre de la largeur du véhicule du véhicule.

Elle est formée par l'assemblage étanche en relation de face à face entre une coque creuse support 11 fixée au plafonnier du véhicule et un panneau de couverture incurvé 12 disposé sous cette coque 11 et dont la convexité est dirigée vers le plancher du véhicule.

Du fait du montage étanche entre le panneau 12 et la coque creuse 11, la console 10 ne nécessite pas de canalisation interne pour la circulation de l'air conditionné : ce dernier circulant directement dans l'espace interne de la console 10 formant conduite.

L'absence de canalisation interne permet de réduire la masse de la console et de diminuer également son coût de revient.

En outre, en s'affranchissant d'une telle canalisation interne, on optimise également l'encombrement global de la console 10.

La coque creuse 11 et la couverture incurvée 12 sont réalisées de préférence par moulage à partir d'un polymère thermoplastique tel que le polychlorure de vinyle (PVC) ou encore le Poly(styrene-butadiene-styrene) (SBS).

La coque creuse 11 comprend une paroi principale sensiblement horizontale 11A ainsi que deux parois latérales 11B, 11C s'évasant en direction des deux bords longitudinaux de la couverture incurvée 12.

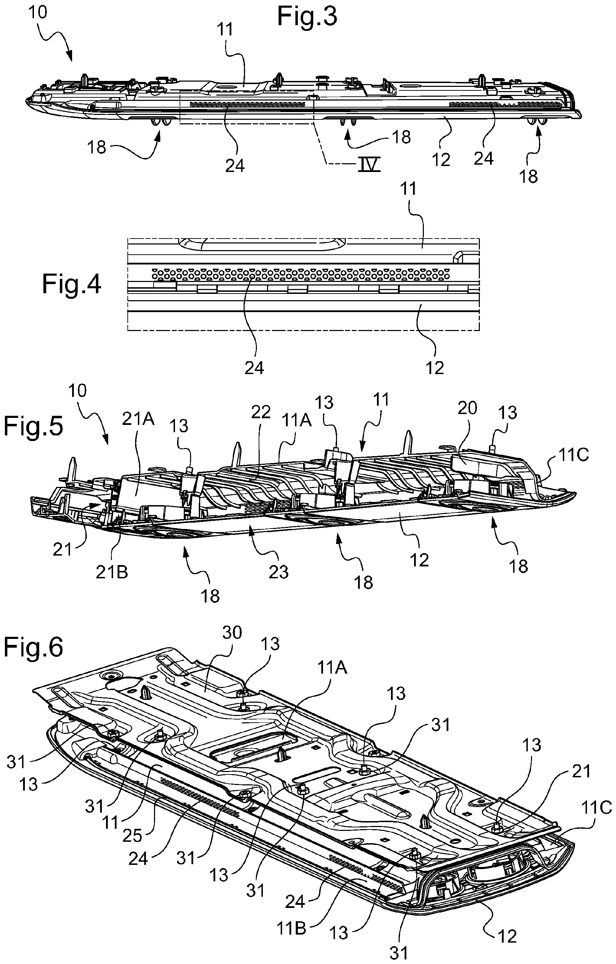

La console 10 est suspendue au plafonnier du véhicule par l'intermédiaire d'une plaque métallique de renfort 30 soudée sur ce plafonnier et sur laquelle vient se fixer la paroi principale 11A de la coque 11 (figure 6).

Cette fixation est ici assurée par l'intermédiaire de vis métalliques 13 vissées dans des écrous 31 soudés sur la plaque de renfort 30 puis clippées sur la paroi principale 11A.

La présence de cette plaque de renfort 20 permet d'éviter les risques de déformation du plafonnier supportant la console 10, notamment en cas de forte charge due par exemple à des chutes de neige importantes.

Le caractère suspendu de la console et le fait que le panneau de couverture incurvé 12 dissimule complètement la coque creuse support 11 aux yeux des passagers donnent ainsi la sensation d'une console « flottant » en dessous du plafonnier, ce qui procure un rendu visuel particulièrement agréable et moderne.

Le panneau de couverture incurvé 12 présente, à proximité de l'extrémité avant de la console 10, une première ouverture 14 recevant un module de commande 15 permettant aux passagers de régler la puissance de ventilation ainsi que la température de consigne souhaitée.

Ce module de commande 15 intègre également au moins un interrupteur permettant l'activation ou l'extinction d'un dispositif d'éclairage d'ambiance comprenant deux guides lumineux souples 25 en polyuréthanne transparent courant le long des deux côtés latéraux de la console 10 et étant couplés chacun à au moins une source lumineuse de type LED.

Le panneau 12 comprend également trois ouvertures transversales rectangulaires 16 s'étendant à intervalle régulier entre l'ouverture 14 recevant le module de commande 15 et l'extrémité arrière de la console 10.

Chacune de ces ouvertures 16 reçoit un socle 17 doté de deux bouches d'aération circulaires 18 s'étendant symétriquement de part et d'autre du plan longitudinal médian de la console 10, et aptes à diffuser de l'air conditionné en direction des sièges arrière dudit véhicule.

Chaque bouche d'aération 18 comprend une buse de diffusion 19 munie de deux volets rotatifs permettant de réguler et d'orienter l'air conditionné sortant de cette bouche.

La vitesse de l'air conditionné au niveau des différentes buses de diffusion 19 de ces bouches d'aération 18 est comprise de préférence entre 10 et 15 m/s et avantageusement sensiblement égale à 13 m/s.

La console 10 dispose ainsi de trois rangées de couples de bouches d'aération 18 situées dans sa partie inférieure et qui sont réparties longitudinalement entre le module de commande 15 et l'extrémité arrière de cette console 10 raccordée à l'unité de génération d'air conditionné.

Comme illustré par la figure 5, la console 10 comporte également deux murets internes 20 prenant racine sur la face interne de la coque creuse 11, et s'étendant transversalement et symétriquement de part et d'autre de son plan longitudinal médian au dessus des deux bouches d'aération 18 de la rangée la plus proche de son extrémité arrière de raccordement (et donc de l'arrivée d'air conditionné en provenance de l'unité de génération d'air).

La présence de ces deux murets 20 génère de la turbulence au niveau de ces deux bouches d'aération qui entraine une diminution de la vitesse de l'air en sortie des bouches d'aération 17 de la rangée la plus proche de l'extrémité arrière de raccordement de la console 10.

On notera également que la console 10 présente une cloison interne 21 séparant la zone dédiée à la circulation de l'air conditionné et celle abritant le module de commande 14. Cette cloison 20 est ici formée par la réunion bout à bout de deux retours transversaux 21A, 21B prenant racine respectivement sur la coque creuse 11 et sur le panneau de couverture 12.

La coque creuse 11 présente en outre une multitude de nervures transversales de rigidification 22 réparties régulièrement le long de sa face interne sur la longueur

Afin de parfaire l'intégration de cette console 10 dans l'habitacle, la face externe du panneau 12 est de préférence recouverte d'un revêtement en tissu 23 identique à celui apposé contre le plafonnier du véhicule, et par exemple de type jersey.

Comme illustré sur les figures 3 et 4, une multitude d'orifices 24 est ménagée le long des deux parois latérales 11B, 11C de la coque creuse 11.

Ces derniers, dont le diamètre est compris de préférence entre 1 et 3 mm, sont répartis longitudinalement sur deux zones distinctes de chacune des parois latérales 11B, 11C, situées respectivement à proximité de l'extrémité arrière de raccordement de la console 10, et entre les deux rangées de bouches d'aération les plus éloignées de cette même extrémité arrière de raccordement.

Ces orifices 24 diffusent ainsi en permanence de l'air conditionné sur les deux côtés de la console 10 suivant une direction sensiblement horizontale.

Cette diffusion indirecte, car non dirigée vers les passagers, assure un brassage permanent de l'air contenu dans la partie arrière de l'habitacle qui permet de générer une atmosphère homogène dans cette zone.

Selon des variantes de réalisation non représentées, certains éléments de la console pavillon 10 sont différents. En particulier, le diamètre et/ou la répartition des orifices de diffusion indirecte d'air conditionné peuvent varier, tout comme le nombre de rangées de bouches d'aération.

Bien entendu, la présente invention ne se limite pas aux formes de réalisation décrites et représentées, mais elle englobe toute autre variante d'exécution dans le cadre des revendications.

## Revendications

1. Console pavillon (10) de circulation et de diffusion d'air conditionné s'étendant longitudinalement dans la partie arrière de l'habitacle d'un véhicule automobile et raccordée à une unité de génération d'air conditionné logée dans ledit véhicule ;
ladite console comportant une pluralité de bouches d'aération (18) situées dans sa partie inférieure et aptes à diffuser de l'air conditionné en direction des sièges arrière dudit véhicule ;
**caractérisée en ce que** ladite console est suspendue au plafonnier dudit véhicule et **en ce qu'**elle présente une multitude d'orifices latéraux (24) aptes à diffuser de l'air conditionné sur les deux côtés de ladite console suivant une direction sensiblement horizontale, comportant trois rangées de dites bouches d'aération (18) réparties longitudinalement entre son extrémité arrière raccordée à la dite unité de génération d'air conditionné et un module de commande (15) situé à son extrémité avant, chaque dite rangée est formée par deux dites bouches d'aération (18) s'étendant symétriquement de part et d'autre du plan longitudinal médian de la dite console, et **en ce qu'**elle comporte deux murets internes (20) s'étendant transversalement et symétriquement de part et d'autre de son plan longitudinal médian au-dessus des deux bouches d'aération (18) de la rangée la plus proche de ladite extrémité arrière de raccordement.

2. Console pavillon de circulation et de diffusion d'air conditionné selon la revendication 1, **caractérisée en ce qu'**elle est formée par l'assemblage en relation de face à face entre une coque creuse support (11) fixée audit plafonnier et un panneau de couverture (12) disposé sous ladite coque (11).

3. Console pavillon de circulation et de diffusion d'air conditionné selon la revendication 2, **caractérisée en ce que** ladite coque creuse (11) et ledit panneau de couverture (12) sont assemblés l'un à l'autre de manière étanche de sorte que l'air conditionné circule directement dans l'espace interne de ladite console formant conduite.

4. Console pavillon de circulation et de diffusion d'air conditionné selon l'une des revendications 2 ou 3, **caractérisée en ce qu'**elle est suspendue audit plafonnier par l'intermédiaire d'une plaque métallique de renfort (30) soudée sur ledit plafonnier et sur laquelle est fixée ladite coque creuse (11).

5. Console pavillon de circulation et de diffusion d'air conditionné selon l'une des revendications 1 à 4, **caractérisée en ce que** chaque dite bouche d'aération (18) comprend une buse de diffusion (19) munie d'au moins un volet rotatif permettant de réguler et d'orienter l'air conditionné sortant de cette bouche (18).

6. Console pavillon de circulation et de diffusion d'air conditionné selon la revendication 1, **caractérisée en ce que** lesdits orifices (24) sont répartis longitudinalement sur deux zones situées respectivement à proximité de ladite extrémité arrière de raccordement et entre les deux rangées de bouches d'aération les plus éloignées de cette même extrémité arrière de raccordement.

7. Console pavillon de circulation et de diffusion d'air conditionné selon l'une des revendications 1 à 6, **caractérisée en ce qu'**elle comporte un dispositif d'éclairage d'ambiance comprenant deux guides lumineux souples (25) courant le long de ses deux côtés latéraux et étant couplés chacun à au moins une source lumineuse.

## Patentansprüche

1. Dachkonsole (10) für die Zirkulation und Diffusion klimatisierter Luft, die sich in Längsrichtung im hinteren Teil des Fahrgastraums eines Kraftfahrzeugs erstreckt und mit einer in diesem Fahrzeug untergebrachten Einheit zur Erzeugung klimatisierter Luft verbunden ist;
wobei die Konsole eine Vielzahl von Luftauslässen (18) aufweist, die in ihrem unteren Abschnitt angeordnet und geeignet sind, klimatisierte Luft zu den Rücksitzen des Fahrzeugs zu verteilen;
**dadurch gekennzeichnet, dass** die Konsole an der Deckenleuchte des Fahrzeugs aufgehängt ist und dass sie eine Vielzahl von seitlichen Löchern (24) aufweist, die geeignet sind, klimatisierte Luft auf beiden Seiten der Konsole in einer im Wesentlichen horizontalen Richtung zu verteilen, umfassend drei Reihen der Lüftungsöffnungen (18), die in Längsrichtung zwischen ihrem hinteren Ende, das mit der Erzeugungseinheit für klimatisierte Luft verbunden ist, und einem Steuermodul (15), das an ihrem vorderen Ende angeordnet ist, verteilt sind, jede der genannten Reihen durch zwei der genannten Luftschlitze (18) gebildet wird, die sich symmetrisch beiderseits der Längsmittelebene des genannten Auslegers erstrecken, und dass sie zwei untere Innenwände (20) aufweist, die sich quer und symmetrisch beiderseits ihrer Längsmittelebene oberhalb der beiden Luftschlitze (18) der Reihe erstrecken, die dem genannten hinteren Verbindungsende am nächsten liegt.

2. Deckenkonsole für die Zirkulation und Diffusion klimatisierter Luft nach Anspruch 1, **dadurch gekennzeichnet, dass** sie durch die Anordnung einer hohlen Trägerschale (11), die an der Deckenleuchte befestigt ist, und einer Abdeckplatte (12), die unter der Schale (11) angeordnet ist, gegenüberliegend gebildet ist.

3. Deckenkonsole für die Zirkulation und Diffusion klimatisierter Luft nach Anspruch 2, **dadurch gekennzeichnet, dass** die hohle Schale (11) und die Abdeckplatte (12) in einer abgedichteten Weise miteinander verbunden sind, so dass die klimatisierte Luft direkt in den Innenraum der Kanalkonsole strömt.

4. Kanalkonsole zur Zirkulation und Diffusion klimatisierter Luft nach einem der Ansprüche 2 oder 3, **dadurch gekennzeichnet, dass** sie an der Deckenleuchte mittels einer verstärkenden Metallplatte (30) aufgehängt ist, die an die Deckenleuchte geschweißt ist und an der die hohle Schale (11) befestigt ist.

5. Fahnenkonsole für die Zirkulation und Diffusion von klimatisierter Luft nach einem der Ansprüche 1 bis 4, **dadurch gekennzeichnet, dass** jede der genannten Luftöffnungen (18) eine Diffusionsdüse (19) umfasst, die mit mindestens einer Drehklappe versehen ist, die es ermöglicht, die aus dieser Öffnung (18) austretende klimatisierte Luft zu regulieren und zu lenken.

6. Konsole für die Zirkulation und Diffusion klimatisierter Luft nach Anspruch 1, **dadurch gekennzeichnet, dass** die Öffnungen (24) in Längsrichtung über zwei Zonen verteilt sind, die jeweils in der Nähe des hinteren Verbindungsendes und zwischen den beiden Reihen von Luftauslässen, die am weitesten von diesem gleichen hinteren Verbindungsende entfernt sind, angeordnet sind.

7. Dachkonsole für die Zirkulation und Diffusion von klimatisierter Luft nach einem der Ansprüche 1 bis 6, **dadurch gekennzeichnet, dass** sie eine Umgebungsbeleuchtungsvorrichtung umfasst, die zwei flexible Lichtleiter (25) umfasst, die entlang ihrer beiden Seiten verlaufen und jeweils mit mindestens einer Lichtquelle gekoppelt sind.

## Claims

1. A roof console (10) for circulation and diffusion of conditioned air extending longitudinally in the rear part of the passenger compartment of a motor vehicle and connected to a conditioned air generating unit housed in said vehicle ;
said console comprising a plurality of air vents (18) located in its lower portion and suitable for diffusing conditioned air towards the rear seats of said vehicle; **characterized in that** said console is suspended from the ceiling light of said vehicle and **in that** it has a plurality of lateral holes (24) suitable for diffusing conditioned air on both sides of said console in a substantially horizontal direction, comprising three rows of said air vents (18) distributed longitudinally between its rear end connected to said conditioned air generating unit and a control module (15) located at its front end, each said row is formed by two said air vents (18) extending symmetrically on either side of the longitudinal median plane of said bracket, and **in that** it comprises two internal low walls (20) extending transversely and symmetrically on either side of its longitudinal median plane above the two air vents (18) of the row closest to said rear connecting end.

2. A ceiling console for circulation and diffusion of conditioned air according to claim 1, **characterised in that** it is formed by the assembly in face-to-face relationship between a hollow support shell (11) fixed to said ceiling light and a cover panel (12) disposed under said shell (11).

3. A ceiling console for circulation and diffusion of conditioned air according to claim 2, **characterized in that** said hollow shell (11) and said cover panel (12) are assembled to each other in a sealed manner so that the conditioned air flows directly into the inner space of said duct console.

4. A duct console for circulating and diffusing conditioned air according to one of claims 2 or 3, **characterized in that** it is suspended from said ceiling light by means of a reinforcing metal plate (30) welded to said ceiling light and to which said hollow shell (11) is fixed.

5. Flag console for circulation and diffusion of conditioned air according to one of claims 1 to 4, **characterized in that** each said air vent (18) comprises a diffusion nozzle (19) provided with at least one rotary flap making it possible to regulate and direct the conditioned air leaving this vent (18).

6. Console for circulation and diffusion of conditioned air according to claim 1, **characterised in that** said orifices (24) are distributed longitudinally over two zones situated respectively close to said rear connection end and between the two rows of air vents furthest away from this same rear connection end.

7. A roof console for circulation and diffusion of air conditioning according to one of claims 1 to 6, **characterised in that** it comprises an ambient lighting device comprising two flexible light guides (25) running along its two lateral sides and each being coupled to at least one light source.
